# FASCICULE DE BREVET EUROPEEN

(11) **EP 3 481 650 B1**
(45) Date de publication et mention de la délivrance du brevet: **15.06.2022**
(21) Numéro de dépôt: 17745829.6
(22) Date de dépôt: 04.07.2017
(51) Int. Cl.: B60C 15/02, B60B 7/01, B60B 7/06, B60B 7/08

(54) **ANNEAU-ENJOLIVEUR POUR ROUE À SIÈGE DE PNEUMATIQUE FLOTTANT**
RINGVERZIERUNG FÜR RAD MIT SCHWIMMENDEM REIFENSITZ
RING-TRIM FOR WHEEL WITH FLOATING TIRE SEAT

(30) Priorité: 08.07.2016 FR 1656594
(43) Date de publication de la demande: 15.05.2019
(73) Titulaire: Compagnie Générale des Etablissements Michelin, 63000 Clermont-Ferrand (FR)
(72) Inventeur: WALSER, Daniel, 63040 Clermont-ferrand Cedex 9 (FR)
(74) Mandataire: Noel, Luminita
(86) Numéro de dépôt international: PCT/FR2017/051817
(87) Numéro de publication internationale: WO 2018/007751

(56) Documents cités:
- WO-A1-03/106193
- WO-A1-2016/046197
- WO-A2-93/07012
- JP-A- H08 216 602

## Description

### Domaine de l'invention

L'invention a pour objet un anneau-enjoliveur pour le rebord d'une roue dont le siège destiné à recevoir le bourrelet de pneumatique est flottant radialement et est prolongé par un rebord.

Un pneumatique, une jante, un extenseur, un anneau-enjoliveur, produits dont il est question dans la présente invention, sont des objets usuellement décrits par une représentation dans un plan méridien, c'est-à-dire un plan contenant un axe de rotation, l'axe de rotation du pneumatique. Les directions radiale et axiale désignent les directions, respectivement, perpendiculaire à l'axe de rotation du pneumatique et parallèle à l'axe de rotation du pneumatique. Dans ce qui suit, les expressions « radialement », et « axialement » signifient respectivement « selon une direction radiale », et « selon la direction axiale ». Les expressions « radialement intérieur, respectivement radialement extérieur » signifient «plus proche, respectivement plus éloigné, de l'axe de rotation du pneumatique, selon une direction radiale ». Un plan médian est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan médian du pneumatique, selon la direction axiale ». Une coupe méridienne est une coupe par un plan qui comprend l'axe de rotation.

### État de la technique

De façon générale, un pneumatique comprend une bande de roulement, destinée à entrer en contact avec un sol, deux flancs prolongeant radialement vers l'intérieur les extrémités axiales de la bande de roulement et deux bourrelets prolongeant radialement vers l'intérieur les deux flancs et destinés à entrer en contact avec une jante.

Dans le document WO2016/046197, il est proposé d'insérer un extenseur élastique entre un bourrelet de pneumatique et une jante. Le lecteur se reportera par exemple à la figure 5 de ce document pour prendre connaissance d'un ensemble roulant appartenant au domaine de l'invention. On y voit un ensemble roulant comprenant un pneumatique, une jante et deux extenseurs identiques. En considérant les conventions de langage rappelées ci-dessus, et en se reportant à la façon dont on monte sur une jante un tel extenseur, un tel extenseur comprend, axialement de l'intérieur vers l'extérieur, une extrémité axialement intérieure destinée à assurer l'accrochage de l'extenseur sur la jante. Un tel extenseur comprend aussi une extrémité axialement extérieure destinée à recevoir un bourrelet de pneumatique. Un corps flexible relie les deux extrémités respectivement axialement intérieure et axialement extérieure. Une telle roue est à siège flottant. Elle comporte une jante dont les extrémités axiales, là où se trouvent les sièges de pneumatique, peuvent se déplacer radialement en cas de très forte sollicitation par une force orientée radialement vers l'axe de rotation de la roue. Pour fixer les idées, signalons que l'on considère qu'un siège est « flottant » si, en écrasant l'ensemble monté sur sol plan, la flèche de la roue est supérieure à 2,5 mm / T, et préférentiellement supérieure à 3,2 mm/T.

L'intérêt de monter un pneumatique sur une roue à siège flottant est de rendre le pneumatique plus insensible à un choc violent tel qu'un choc contre un trottoir par exemple. Cela autorise un déplacement supplémentaire du bourrelet de pneumatique lié au débattement autorisé par le siège flottant. On comprend aisément que plus la course offerte au pneumatique est grande, plus grande est son insensibilité au choc. Et ceci d'autant plus que l'espace pouvant accueillir ce débattement est important. Il ne faut donc pas que la partie rigide de la roue vienne contrarier ce débattement.

Dans le domaine industriel des roues et de leurs enjoliveurs, un enjoliveur recouvre tout ou partie du disque de roue, afin d'en améliorer l'esthétique. Parfois, l'enjoliveur ne recouvre que le rebord de jante, encore appelé crochet de jante, comme illustré par les documents JPH08-216602A, JPH08-188002A et WO93-07012. Parfois aussi, l'enjoliveur recouvre en partie le pneumatique, comme illustré par le document WO03-106193.

Revenant à la catégorie des roues à siège flottant, il faut que le volume sous l'extrémité de jante, sous le siège, ne comporte aucun obstacle s'opposant fonctionnellement aux déformations recherchées lorsque l'on utilise une telle roue à siège flottant. C'est-à-dire qu'il faut un vide fonctionnel. Or ce vide fonctionnel crée une contrainte de design, l'œil s'attachant à la partie métallique de la roue qui contraste avec l'extenseur et le pneumatique, qui sont en caoutchouc, donc de couleur noire. Les conséquences de la présence d'extenseurs ne vont pas dans le sens du design actuel des roues. En effet, la tendance actuelle est d'avoir, visuellement, une roue la plus grande possible et parfois aussi d'avoir des roues «full face », c'est-à-dire des roues ne présentant pas de décrochement visuel sous les crochets de jantes, mais au contraire présentant une surface presque plane entre flanc du pneumatique et disque de roue.

Se pose donc le problème de trouver le moyen technique pour obtenir une perception visuelle d'une roue de grand diamètre, allant jusqu'au bourrelet de pneumatique.

### Description brève de l'invention

L'invention a donc pour objet un anneau-enjoliveur pour roue à siège de pneumatique flottant, ladite roue ayant un axe de rotation, ladite roue comprenant une jante qui comporte des parties latérales de jante, chaque partie latérale de jante comportant un siège de pneumatique prolongé axialement vers l'extérieur par un rebord, au moins l'un des sièges de pneumatique étant un siège flottant et le rebord prolongeant axialement ledit siège flottant étant un rebord flottant, ledit anneau-enjoliveur ayant une forme de révolution engendrée par une section centrale comportant une portion d'orientation moyenne sensiblement radiale, comportant des éléments de fixation aptes à assurer une fixation amovible sur le rebord, caractérisé en ce que l'anneau-enjoliveur a une aptitude à la déformation élastique lui permettant de reprendre sa forme initiale sans déformation permanente, lorsque l'anneau-enjoliveur est immobilisé sur une table plane d'essai par une première section A et une deuxième section B fixes d'un arc de longueur curviligne valant 430 mm et qu'on impose audit arc une déformation déplaçant axialement ladite section centrale d'une valeur de 2 mm, tout en lui faisant quitter l'orientation radiale d'un angle α valant 5°, et en ce que l'anneau-enjoliveur subit une déformation permanente ou une rupture si on impose audit arc une déformation par déplacement axial de ladite section centrale d'une valeur supérieure à 10 mm tout en lui faisant quitter l'orientation radiale d'un angle α supérieur à 35°.

Ainsi, alors qu'un extenseur élastique inséré entre un bourrelet de pneumatique et roue rigide est en général réalisé à base de matière élastomérique renforcée (comme les pneumatiques), de couleur noire en général, en rapportant un anneau-enjoliveur, l'invention permet d'accorder l'aspect de l'anneau enjoliveur à l'aspect du disque de la roue, par exemple d'en accorder les couleurs, par exemple en les choisissant identiques, ce qui permet de créer un objet final (roue à siège flottant) dont l'esthétique est tout aussi plaisante que celle des roues rigides, notamment des roues en alliage léger devenues très populaires pour les véhicules de tourisme.

La roue à siège flottant, dans sa partie rigide, peut être réalisée de toutes les manières convenables pour roue classique, c'est-à-dire pour roue entièrement rigide aux sollicitations de service, comme par exemple en tôle emboutie, en alliage léger, en matière composite ou combinant l'une ou l'autre des technologies énoncées ci-dessus. La portée de montage permet le montage de la roue sur un moyeu, directement ou au moyen de pièces intermédiaires (elles aussi, rigides). La portée de fixation sur un moyeu est du côté axialement intérieur de la roue, l'enjoliveur étant monté du côté axialement extérieur.

En outre, dans une variante d'exécution avantageuse, on assure une meilleure continuité visuelle entre l'anneau-enjoliveur et la roue en utilisant en combinaison un tel anneau-enjoliveur et un enjoliveur déformable, ayant un bord central fixé sur le disque de la roue et ayant une périphérie extérieure disposée juste sous le rebord et reliée au bord central par un secteur intermédiaire déformable de façon à ce que la périphérie extérieure puisse être déplacée radialement vers l'intérieur par rapport au bord central. On utilise donc un enjoliveur de roue qui est lui-même flexible de façon à se déformer dans une certaine mesure (le dimensionnement peut calculer un seuil de déformation admissible) en fonction du flottement du siège de jante sur la roue.

### Description des Figures

L'invention est décrite ci-après à l'aide des figures 1 à 7, parmi lesquelles :
- la figure 1 est une coupe méridienne partielle d'un ensemble pneumatique monté sur roue à jante flottante et anneau-enjoliveur selon l'invention ;
- les figures 2 à 7 sont des coupes radiales montrant différentes variantes de réalisation d'un anneau-enjoliveur selon l'invention ;
- la figure 8 est une coupe méridienne schématique d'un anneau-enjoliveur selon l'invention ;
- la figure 9 est une coupe selon VV à la figure 8.

### Description détaillée de l'invention

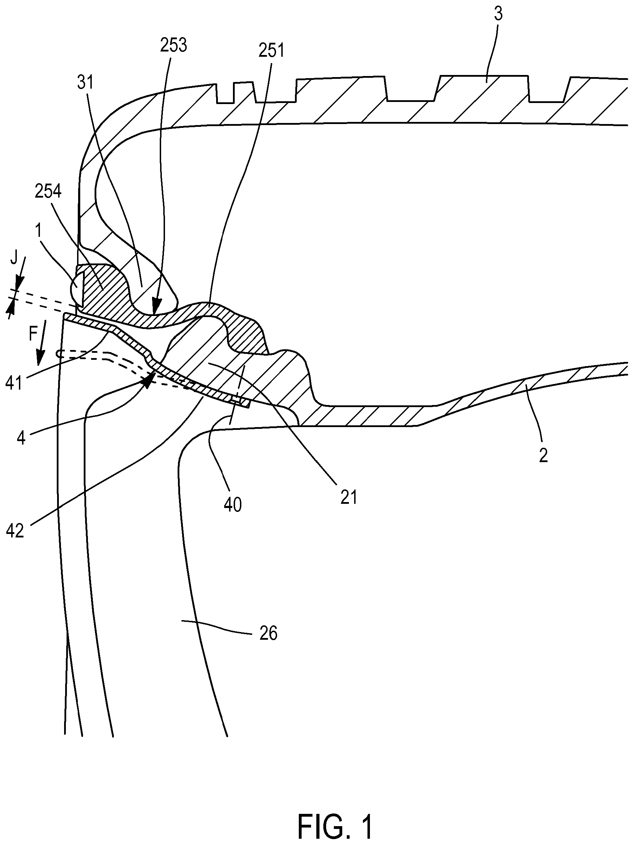

A la figure 1, on voit un anneau-enjoliveur 1, une roue à siège flottant 2, un pneumatique 3 et un enjoliveur de roue 4. La roue à siège flottant 2 est formée par l'assemblage d'une base-roue 21 rigide, en général monobloc, et de deux parties latérales de jante 251 toutes deux flexibles. Chaque partie latérale de jante comporte un siège de pneumatique 253 prolongé axialement vers l'extérieur par un rebord 254. Le pneumatique 3 comporte deux bourrelets 31 chacun monté sur l'un desdits sièges de pneumatique 253. Dans ce mode de réalisation, chacune des parties latérales de jante reprend l'enseignement indiqué pour l'extenseur dans le document WO2016/046197 ; chaque partie latérale de jante est réalisée en élastomère renforcé permettant le déplacement F selon une direction radiale du rebord 254 par rapport à l'extrémité opposée de ladite partie latérale de jante.

En variante, la roue à siège flottant pourrait aussi comporter des parties latérales de jante flexibles montées de diverses manières, comme par exemple selon l'un ou l'autre des exemples données dans le document WO2015/086662, toutes choses équivalentes en ce qui concerne la présente invention qui trouve à s'appliquer dès lors que la roue comporte des sièges flottants, quels que soient les modes de réalisation de la partie flexible de la roue, dès lors qu'elle se termine par un rebord 254 contre lequel le bourrelet 31 de pneumatique s'appuie axialement.

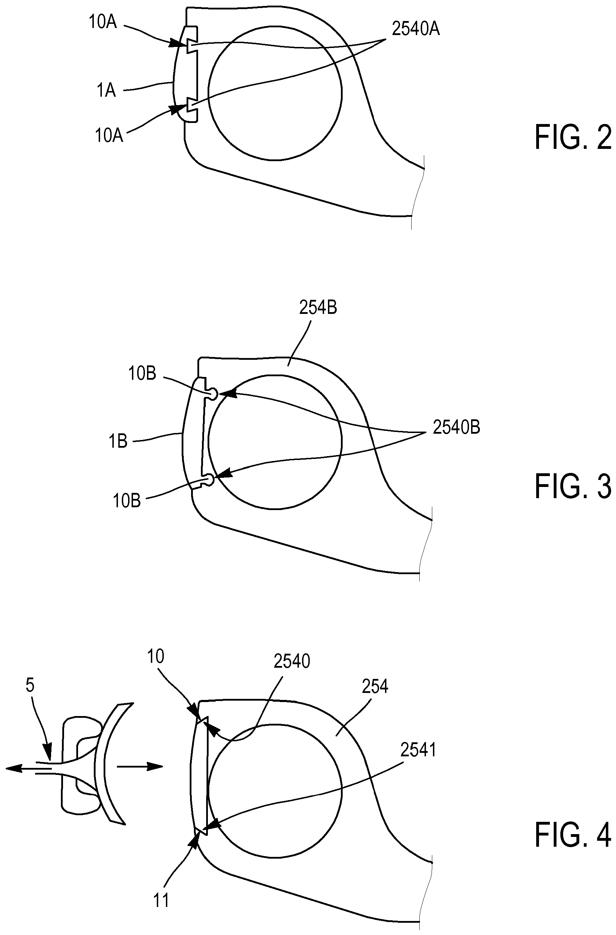

Revenons à l'anneau-enjoliveur 1 représenté aux figures 1 et 4. Parmi les variantes de réalisation décrites dans la suite, l'anneau-enjoliveur 1 de la figure 1 est celui montré à la figure 4 à laquelle le lecteur est invité à se reporter aussi. L'anneau-enjoliveur 1 comporte des faces radialement extérieure 10 et intérieure 11, chacune de ces faces étant inclinée axialement vers l'extérieur. Le rebord 254 comporte des faces radialement extérieure 2540 et intérieure 2541 (voir figure 4), chacune de ces faces étant inclinée axialement vers l'intérieur, de façon à coopérer pour assurer le montage amovible de l'anneau-enjoliveur 1 sur le rebord 254. De préférence, l'anneau-enjoliveur 1 est configuré de façon à être flexible aux sollicitations de service. En effet, lorsque le pneumatique heurte un obstacle important, tel un nid de poule, il impose un déplacement au rebord 254. Si l'on souhaite que l'anneau-enjoliveur 1 survive à une telle sollicitation normalement exceptionnelle, il faut qu'il ne dépasse pas une déformation élastique. Afin d'assurer le montage de l'anneau-enjoliveur 1 sur le rebord 254, on peut utiliser par exemple un outil 5 (voir figure 4) permettant de le pré-déformer par l'action du vide. Ainsi, l'anneau-enjoliveur 1 comporte des éléments de fixation qui coopèrent avec la paroi axialement extérieure dudit rebord. La liaison entre anneau-enjoliveur 1 et rebord 254 est assurée par des surfaces (10, 11 et 2540, 2541) en contre-dépouille axialement.

A la figure 1, on voit aussi un enjoliveur 4 ayant une périphérie extérieure 41 qui a une forme de révolution quasi parallèle à, en position de montage, la face radialement intérieure de partie latérale de jante 251 axialement à l'extérieur, en regard du rebord 254. L'enjoliveur 4 a une périphérie centrale 42 épousant la face radialement intérieure du bord axialement extérieur 21 sur lequel est aménagé un siège pour monter la partie latérale flexible 251de la roue 2. L'enjoliveur 4 est destiné à être fixé par des vis 40. Notons que la roue 2 comporte des rayons 26 et que la périphérie centrale 42 comporte des découpes laissant la place nécessaire pour les rayons 26. La périphérie extérieure 41 est agencée pour coopérer avec jeu fonctionnel J par rapport audit rebord 2541. En cas de forte sollicitation F imposant le déplacement radial de la périphérie extérieure 41, l'enjoliveur 4, construit pour être suffisamment déformable, prend l'allure représentée en traits discontinus. L'avantage de cette disposition est qu'elle assure une meilleure continuité visuelle. Ainsi, l'invention s'étend également à un ensemble formé par un tel anneau-enjoliveur et un extenseur pour roue à siège flottant, permettant de modifier une roue entièrement rigide traditionnelle en roue à jante flottante, l'extenseur formant une partie latérale de jante et comportant un siège de pneumatique prolongé axialement vers l'extérieur par un rebord.

Les figures 2, 3, 5 et suivantes montrent des variantes de réalisation de l'anneau-enjoliveur selon l'invention. Elles ne montrent que l'anneau-enjoliveur et le rebord sur lequel il est monté.

A la figure 2, on voit un anneau-enjoliveur 1A comportant deux gorges circonférentielles 10A aménagées sur la face axialement intérieure de l'anneau-enjoliveur 1A. On voit un rebord 254A comportant deux protubérances circonférentielles 2540A aménagées sur la face axialement extérieure du rebord 254A. Lesdites gorges 10A et protubérances 2540A forment des queues d'aronde complémentaires, vues en coupe méridienne, de façon à coopérer pour assurer le montage amovible de l'anneau-enjoliveur 1A sur le rebord 254A

A la figure 3, on voit un anneau-enjoliveur 1B comportant deux protubérances circonférentielles 10B aménagées sur la face axialement intérieure de l'anneau-enjoliveur 1B. On voit un rebord 254B comportant deux gorges circonférentielles 2540B aménagées sur la face axialement extérieure du rebord 254B. Lesdites gorges 10B et protubérances 2540B sont de formes circulaires complémentaires, vues en coupe méridienne, de façon à coopérer pour assurer le montage amovible de l'anneau-enjoliveur 1B sur le rebord 254B.

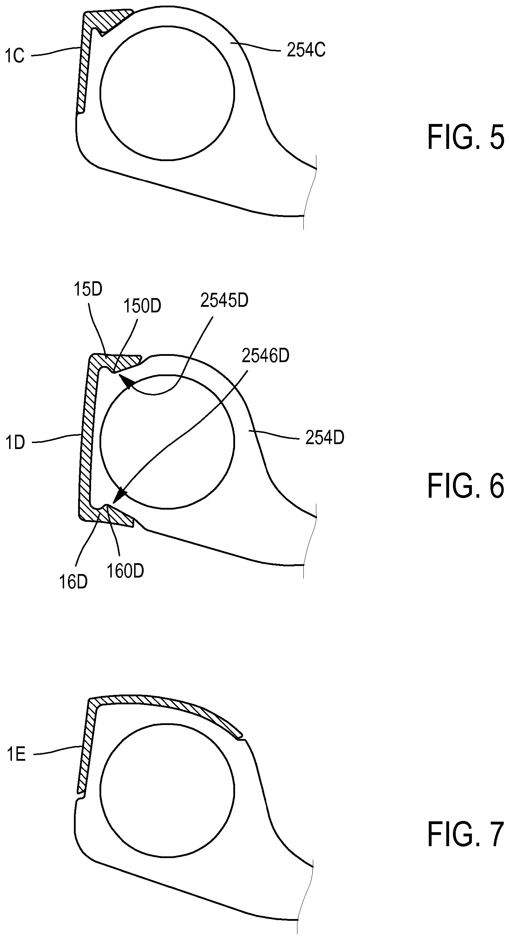

A la figure 5, on voir un anneau-enjoliveur 1C présentant une forme en « L » inversé, vu en coupe méridienne. Il comporte une branche radialement extérieure 15C orientée axialement, comportant une nervure 150C faisant protubérance radialement vers l'intérieur. Le rebord 254C comporte une rainure 2545C aménagée sur sa surface radialement extérieure et une rainure 2546C aménagée sur sa surface radialement intérieure. Lesdites rainures et nervures coopérant pour assurer le montage amovible de l'anneau-enjoliveur 1C sur le rebord 254C. Rappelons que l'anneau-enjoliveur 1C est une pièce de révolution, tout comme le rebord 254C, ce qui fait que cette disposition assure une immobilisation positive de l'anneau-enjoliveur 1C sur le rebord 254C, en usage normal, c'est-à-dire hors les cas de choc violent tel que le passage dans un nid de poule.

A la figure 6, on voir un anneau-enjoliveur 1D présentant une forme en « C », vu en coupe méridienne. Il comporte une branche radialement extérieure 15D orientée axialement et une branche radialement intérieure 16D orientée axialement. Ladite branche radialement extérieure 15D comporte une nervure 150D faisant protubérance radialement vers l'intérieur et ladite branche radialement intérieure 16D comportant une nervure 160D faisant protubérance radialement vers l'extérieur. Le rebord 254D comporte une rainure 2545D aménagée sur sa surface radialement extérieure et une rainure 2546D aménagée sur sa surface radialement intérieure. Lesdites rainures et nervures coopérant pour assurer le montage amovible de l'anneau-enjoliveur 1D sur le rebord 254D. Cette variante, outre une différence d'effet esthétique, permet un montage plus solide de l'anneau-enjoliveur. Différentes variations peuvent aisément être dessinées, en fonction des demandes des designers : par exemple, la branche radialement intérieure peut être allongée axialement vers l'intérieur, afin de combler l'espace caractéristique des ensembles roulants comportant un extenseur.

A la figure 7, on voir un anneau-enjoliveur 1E présentant une forme en «L» inversé, vu en coupe méridienne. Il comporte une branche radialement extérieure 15E orientée axialement, formant un arc de cercle, vue en coupe méridienne, de forme complémentaire au contour du rebord 254E. Rappelons que l'anneau-enjoliveur 1E est une pièce de révolution, tout comme le rebord 254E, ce qui fait que cette disposition assure une immobilisation positive de l'anneau-enjoliveur 1D sur le rebord 254E.

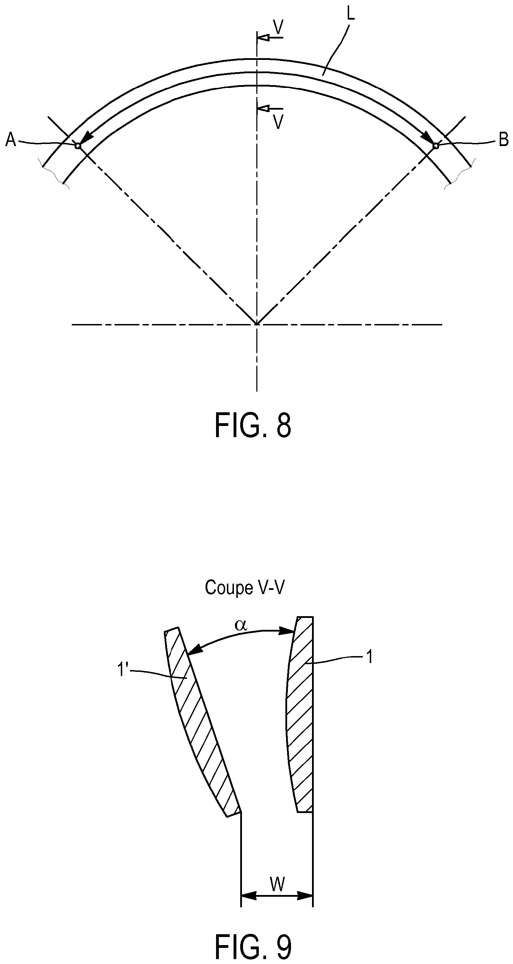

Exposons un test auquel on peut soumettre un anneau-enjoliveur afin de vérifier s'il jouit d'une capacité de déformation élastique suffisante pour s'accommoder des déformations de l'extenseur afin de rester bien en place en usage courant. La figure 8 est une vue partielle de l'anneau-enjoliveur 1, immobilisé sur une table plane d'essai par ses sections A et B. Les sections ne peuvent subir aucun déplacement pendant l'essai. Etant donné que l'anneau-enjoliveur 1 subit des déformations lorsque le pneumatique passe dans l'aire de contact, le test porte sur un arc de l'anneau-enjoliveur 1, dont on a fixé expérimentalement la longueur curviligne L à 430 mm, en observant que cette valeur est suffisamment indépendante des dimensions de l'anneau-enjoliveur 1 aux fins du test. La figure 9 représente l'anneau-enjoliveur 1 sans déformation, et montre la forme 1' que prend cet anneau-enjoliveur de la figure 8 lorsqu'on lui impose, aux moyen de cales adaptées, une déformation de caractéristiques données : de préférence, on déplace axialement ladite section centrale d'une valeur W de 5 mm, tout en lui faisant quitter l'orientation radiale d'un angle α valant 15°, et l'anneau-enjoliveur reprend sa forme initiale car il n'a pas subi de déformation permanente. Notons qu'un anneau-enjoliveur selon l'invention ne jouit pas de caractéristiques de déformation élastique très supérieures car il est utile que l'anneau-enjoliveur quitte son logement ou soit rompu ou comporte une déformation permanente visible si l'ensemble roulant a subi un choc très important, qui pourrait lui être dommageable, afin d'apporter une détection visuelle de ce choc. Ainsi, selon l'invention, l'anneau-enjoliveur subit une déformation permanente ou une rupture si on lui impose une déformation par déplacement axial de ladite section centrale d'une valeur W supérieure à 10 mm tout en lui faisant quitter l'orientation radiale d'un angle α supérieur à 35°,

L'invention se prête à de multiples variations ; elle ouvre un champ de conception neuf pour l'utilisation de roues à jante flottante ; parmi des variations possibles et intéressantes, citons la possibilité d'intégrer à l'anneau-enjoliveur selon l'invention un indicateur de choc subi au-delà d'un certain seuil, qui va résulter par exemple en une déformation permanente visible d'une partie de l'enjoliveur, ou une rupture locale de celui-ci, ou encore, délibérément, l'anneau-enjoliveur ne restera pas monté, l'exemple de la figure 5 se prêtant plus particulièrement à un tel effet.

L'homme du métier pourra aisément adopter des mesures de conception facilitant le montage ou la tenue du montage, comme l'ajout d'un profilé métallique de forme appropriée moulé avec ou collé sur le rebord, ou encore adopter des variantes de forme pour les éléments formant une liaison mâle-femelle comme des boutons ou autre formes non continues circonférentiellement à la place de ou en complément aux rainures et protubérances ici décrites. Quant au choix du matériau, les matières plastiques sont appropriées ; il convient bien entendu de tenir compte du matériau de l'extenseur sur lequel il est monté ; le dimensionnement sera de préférence tel que l'anneau-enjoliveur sera, une fois monté, plutôt en légère tension.

## Revendications

1. Anneau-enjoliveur (1, 1A, 1B, 1C, 1D, 1E) pour roue à siège de pneumatique flottant (2), ladite roue ayant un axe de rotation, ladite roue comprenant une jante qui comporte des parties latérales de jante (251), chaque partie latérale de jante (251) comportant un siège de pneumatique prolongé axialement vers l'extérieur par un rebord, au moins l'un des sièges de pneumatique étant un siège flottant (253) et le rebord prolongeant axialement ledit siège flottant étant un rebord flottant (254, 254B, 254C, 254D), ledit anneau-enjoliveur ayant une forme de révolution engendrée par une section centrale comportant une portion d'orientation moyenne sensiblement radiale, comportant des éléments de fixation aptes à assurer une fixation amovible sur le rebord (254, 254B, 254C, 254D) dudit siège flottant (253), **caractérisé en ce que** l'anneau-enjoliveur a une aptitude à la déformation élastique lui permettant de reprendre sa forme initiale sans déformation permanente, lorsque l'anneau-enjoliveur est immobilisé sur une table plane d'essai par une première section A et une deuxième section B fixes d'un arc de longueur curviligne valant 430 mm et qu'on impose audit arc une déformation déplaçant axialement ladite section centrale d'une valeur (W) de 2 mm, tout en lui faisant quitter l'orientation radiale d'un angle (α) valant 5°, ce que l'anneau-enjoliveur subit une déformation permanente ou une rupture si on impose audit arc une déformation par déplacement axial de ladite section centrale d'une valeur (W) supérieure à 10 mm tout en lui faisant quitter l'orientation radiale d'un angle (α) supérieur à 35° .

2. Anneau-enjoliveur (1, 1A, 1B, 1E) selon la revendication 1, **caractérisé en ce que** les éléments de fixation coopèrent avec la paroi axialement extérieure dudit rebord (254, 254B).

3. Anneau-enjoliveur (1C, 1D, 1E) selon l'une des revendications précédentes, **caractérisé en ce que** les éléments de fixation coopèrent avec la paroi radialement extérieure dudit rebord (254C, 254D).

4. Anneau-enjoliveur (1, 1A, 1B, 1E) selon l'une des revendications précédentes, **caractérisé en ce que** la liaison entre anneau-enjoliveur (1, 1A, 1B, 1E) et rebord (254, 254B) est assurée par des surfaces en contre-dépouille axialement.

5. Anneau-enjoliveur (1A) selon l'une des revendications 1 à 2 et 4, **caractérisé en ce que** l'anneau-enjoliveur (1A) et le rebord (254) comportent, l'un au moins une gorge circonférentielle et l'autre au moins une protubérance circonférentielle, aménagées l'une sur la face axialement intérieure de l'anneau-enjoliveur (1A) et l'autre sur la face axialement extérieure du rebord (254), lesdites gorges et protubérances formant des queues d'aronde complémentaires, vues en coupe méridienne, de façon à coopérer pour assurer le montage amovible de l'anneau-enjoliveur (1A) sur le rebord (254).

6. Anneau-enjoliveur (1) selon l'une des revendications 1, 2 et 4, **caractérisé en ce qu'**il comporte des faces radialement extérieure (10) et intérieure (11), chacune de ces faces étant inclinée axialement vers l'extérieur, **en ce que** le rebord (254) comporte des faces radialement extérieure (2540) et intérieure (2541), chacune de ces faces étant inclinée axialement vers l'intérieur, de façon à coopérer pour assurer le montage amovible de l'anneau-enjoliveur (1) sur le rebord (254).

7. Anneau-enjoliveur (1D) selon l'une des revendications 1 et 3, **caractérisé en ce que**, vu en coupe méridienne, il présente une forme en «C», comportant une branche radialement extérieure (15D) orientée axialement et comportant une branche radialement intérieure (16D) orientée axialement, ladite branche radialement extérieure (15D) comportant une nervure (150D) faisant protubérance radialement vers l'intérieur, ladite branche radialement intérieure (16D) comportant une nervure (160D) faisant protubérance radialement vers l'extérieur, et **en ce que** ledit rebord (254D) comporte une rainure (2545D) aménagée sur sa surface radialement extérieure et une rainure (2546D) aménagée sur sa surface radialement intérieure, lesdites rainures et nervures coopérant pour assurer le montage amovible de l'anneau-enjoliveur (1D) sur le rebord (254D).

8. Ensemble formé par un anneau-enjoliveur (1, 1A, 1B, 1C, 1D, 1E) selon l'une quelconque des revendications précédentes et d'un extenseur pour roue à siège flottant (2), l'extenseur formant une partie latérale de jante et comportant un siège (253) de pneumatique prolongé axialement vers l'extérieur par un rebord (254, 254B, 254C, 254D).

## Patentansprüche

1. Zierring (1, 1A, 1B, 1C, 1D, 1E) für ein Rad (2) mit Reifenschwebesitz, wobei das Rad eine Rotationsachse hat, wobei das Rad eine Felge umfasst, die seitliche Felgenteile (251) aufweist, wobei jeder seitliche Felgenteil (251) einen Reifensitz aufweist, der durch einen Flansch axial nach außen verlängert ist, wobei mindestens einer der Reifensitze ein Schwebesitz (253) ist und der den Schwebesitz axial verlängernde Flansch ein Schwebeflansch (254, 254B, 254C, 254D) ist, wobei der Zierring eine rotationssymmetrische Form hat, die durch einen mittleren Abschnitt erzeugt wird, der einen Teil mit im Wesentlichen radialer mittlerer Ausrichtung aufweist, aufweisend Befestigungselemente, die in der Lage sind, eine lösbare Befestigung an dem Flansch (254, 254B, 254C, 254D) des Schwebesitzes (253) zu gewährleisten, **dadurch gekennzeichnet, dass** der Zierring zur elastischen Deformation fähig ist, wodurch er ohne permanente Deformation zu seiner Ausgangsform zurückkehren kann, wenn der Zierring mit einem festgespannten ersten Abschnitt A und einem festgespannten zweiten Abschnitt B über einen Bogen mit krummliniger Länge von 430 mm auf einem flachen Prüfstand immobilisiert ist und der Bogen mit einer Deformation beaufschlagt wird, durch die der mittlere Abschnitt mit einem Wert (W) von 2 mm axial verschoben wird, während gleichzeitig veranlasst wird, dass er die radiale Ausrichtung in einem Winkel (α) von 5° verlässt, und dass der Zierring eine permanente Deformation oder einen Bruch erfährt, wenn der Bogen durch axiales Verschieben des mittleren Abschnitts mit einem Wert (W) von mehr als 10 mm mit einer Deformation beaufschlagt wird, während gleichzeitig veranlasst wird, dass er die radiale Ausrichtung in einem Winkel (α) von größer 35° verlässt.

2. Zierring (1, 1A, 1B, 1E) nach Anspruch 1, **dadurch gekennzeichnet, dass** die Befestigungselemente mit der axial äußeren Wand des Flanschs (254, 254B) zusammenwirken.

3. Zierring (1C, 1D, 1E) nach einem der vorhergehenden Ansprüche, **dadurch gekennzeichnet, dass** die Befestigungselemente mit der axial äußeren Wand des Flanschs (254C, 254D) zusammenwirken.

4. Zierring (1, 1A, 1B, 1E) nach einem der vorhergehenden Ansprüche, **dadurch gekennzeichnet, dass** die Verbindung zwischen dem Zierring (1, 1A, 1B, 1E) und dem Flansch (254, 254B) durch axial hinterschnittene Flächen gewährleistet wird.

5. Zierring (1A) nach einem der Ansprüche 1 bis 2 und 4, **dadurch gekennzeichnet, dass** der Zierring (1A) und/oder der Flansch (254) mindestens eine Umfangsauskehlung und der jeweils andere mindestens einen Umfangsvorsprung aufweisen, die jeweils an der axial inneren Fläche des Zierrings (1A) bzw. an der axial äußeren Fläche des Flanschs (254) ausgeführt sind, wobei die Auskehlungen und Vorsprünge im Meridianschnitt gesehen komplementäre Schwalbenschwänze bilden, so dass sie zusammenwirken, um die lösbare Montage des Zierrings (1A) an dem Flansch (254) zu gewährleisten.

6. Zierring (1) nach einem der Ansprüche 1, 2 und 4, **dadurch gekennzeichnet, dass** er eine radial äußere Fläche (10) und eine radial innere Fläche (11) aufweist, wobei jede dieser Flächen axial nach außen geneigt ist, und dass der Flansch (254) eine radial äußere Fläche (2540) und eine radial innere Fläche (2541) aufweist, wobei jede dieser Flächen axial nach innen geneigt ist, so dass sie zusammenwirken, um die lösbare Montage des Zierrings (1) an dem Flansch (254) zu gewährleisten.

7. Zierring (1D) nach einem der Ansprüche 1 und 3, **dadurch gekennzeichnet, dass** er im Meridianschnitt gesehen die Form eines "C" aufweist, die einen axial ausgerichteten radial äußeren Schenkel (15D) und einen axial ausgerichteten radial inneren Schenkel (16D) aufweist, wobei der radial äußere Schenkel (15D) eine Rippe (150D) aufweist, die radial nach innen vorragt, und der radial innere Schenkel (16D) eine Rippe (160D) aufweist, die radial nach außen vorragt, und dass der Flansch (254D) eine Nut (2545D), die an seiner radial äußeren Fläche ausgeführt ist, und eine Nut (2546D), die an seiner radial inneren Fläche ausgeführt ist, aufweist, wobei die Nuten und Rippen zusammenwirken, um die lösbare Montage des Zierrings (1D) an dem Flansch (254D) zu gewährleisten.

8. Baugruppe, gebildet durch einen Zierring (1, 1A, 1B, 1C, 1D, 1E) nach einem der vorhergehenden Ansprüche und einen Reifenspreizer für ein Schwebesitzrad (2), wobei der Reifenspreizer einen seitlichen Felgenteil bildet und einen Reifensitz (253) aufweist, der durch einen Flansch (254, 254B, 254C, 254D) axial nach außen verlängert ist.

## Claims

1. Annular wheel-trim (1, 1A, 1B, 1C, 1D, 1E) for a wheel that has a floating tyre seat (2), the said wheel having an axis of rotation, the said wheel comprising a rim which comprises rim lateral parts (251), each at least one rim lateral part (251) comprising a tyre seat extended axially outwards by a flange, at least one of the tyre seats being a floating seat (253) and the flange axially extending the said floating seat being a floating flange (254, 254B, 254C, 254D), said annular wheel-trim having a shape of revolution generated by a central section comprising a portion of substantially radial mean orientation, comprising fixing elements able to provide removable attachment to the flange (254, 254B, 254C, 254D) of said floating seat (253), **characterized in that** the annular wheel-trim has a capacity for elastic deformation that allows it to revert to its initial shape without permanent deformation when the annular wheel-trim is immobilized on a flat test table via a first section A and a second section B unable to move over an arc with a curvilinear length of 430 mm, and when said arc is subjected to deformation moving the said central section axially by a value (W) of 2 mm, while at the same time causing it to depart from the radial orientation by an angle (α) of 5°, and **in that** the annular wheel-trim experiences permanent deformation or breakage if said arc is subjected to a deformation by axial movement of the said central section by an amount (W) greater than 10 mm while at the same time causing it to depart from the radial orientation by an angle (α) greater than 35°.

2. Annular wheel-trim (1, 1A, 1B, 1E) according to Claim 1, **characterized in that** the fixing elements collaborate with the axially exterior wall of the said flange (254, 254B).

3. Annular wheel-trim (1C, 1D, 1E) according to one of the preceding claims, **characterized in that** the fixing elements collaborate with the radially exterior wall of the said flange (254C, 254D).

4. Annular wheel-trim (1, 1A, 1B, 1E) according to one of the preceding claims, **characterized in that** the connection between annular wheel-trim (1, 1A, 1B, 1E) and flange (254, 254B) is provided by surfaces with an axial undercut.

5. Annular wheel-trim (1A) according to one of Claims 1 to 2 and 4, **characterized in that** the annular wheel-trim (1A) and the flange (254) comprise, one of them at least one circumferential groove and the other at least one circumferential protrusion, these being formed one of them on the axially interior face of the annular wheel-trim (1A) and the other of them on the axially exterior face of the flange (254), the said grooves and protrusions forming complementary dovetails, when viewed in meridian section, so that they collaborate with one another to provide the removable mounting of the annular wheel-trim (1A) on the flange (254).

6. Annular wheel-trim (1) according to one of Claims 1, 2 and 4, **characterized in that** it comprises radially exterior (10) and interior (11) faces, each of these faces being inclined axially outwards, **in that** the flange (254) comprises radially exterior (2540) and interior (2541) faces, each of these faces being inclined axially inwards, so as to collaborate in order to allow the removable mounting of the annular wheel-trim (1) on the flange (254).

7. Annular wheel-trim (1D) according to one of Claims 1 and 3, **characterized in that**, viewed in meridian section, it has a C-shape, comprising an axially-oriented radially exterior branch (15D) and comprising an axially-oriented radially interior branch (16D), the said radially exterior branch (15D) comprising a rib (150D) acting as a radially inwards protrusion, the said radially interior branch (16D) comprising a rib (160D) acting as a radially outwards protrusion, and **in that** the said flange (254) comprises a slot (2545D) formed on its radially exterior surface and a slot (2546D) formed on its radially interior surface, the said slots and ribs collaborating with one another to provide the removable mounting of the annular wheel-trim (1D) on the flange (254D).

8. Assembly formed by an annular wheel-trim (1, 1A, 1B, 1C, 1D, 1E) according to any one of the preceding claims and of an extender for a floating-seat wheel (2), the extender forming a rim lateral part and comprising a tyre seat (253) extended axially outwards by a flange (254, 254B, 254C, 254D).
